Europäisches Patentamt

(19) European Patent Office                    (11) Numéro de publication: **0 248 726**
Office européen des brevets                                            **B1**

(12)                        **FASCICULE DE BREVET EUROPEEN**

(45) Date de publication du fascicule du brevet:     (51) Int. Cl.⁵: **G21B 1/00**
   **10.10.90**

(21) Numéro de dépôt: **87401229.7**

(22) Date de dépôt: **02.06.87**

(54) **Dispositif de serrage axial d'un appareil torique de fusion.**

(30) Priorité: **03.06.86 FR 8607971**

(43) Date de publication de la demande:
   **09.12.87 Bulletin 87/50**

(45) Mention de la délivrance du brevet:
   **10.10.90 Bulletin 90/41**

(84) Etats contractants désignés:
   **DE ES GB IT**

(56) Documents cités:
   **DE-A- 2 725 439**
   **FR-A- 2 262 378**

   **NUCLEAR TECHNOLOGY/FUSION, vol. 4, no. 2, part I,
   septembre 1983, pages 305-326, Danville, Illinois, US;
   R.A. GROSS: "Survey of reactor aspects of compact
   fusion concepts"**

(73) Titulaire: **FRAMATOME, Tour Fiat 1, Place de la Coupole,
   F-92400 Courbevoie(FR)**

(72) Inventeur: **Moreau, Philippe, 38 rue Perronet,
   F-92200 Neuilly(FR)**

(74) Mandataire: **Mongrédien, André et al, c/o
   BREVATOME 25, rue de Ponthieu, F-75008 Paris(FR)**

ACTORUM AG

## Description

La présente invention concerne un système de serrage axial du réacteur torique d'une installation de fusion nucléaire.

A l'heure actuelle, la fusion nucléaire pratiquée dans les installations de recherche est réalisée à l'intérieur de bouteilles électromagnétiques à l'intérieur desquelles le plasma est confiné et porté à très haute énergie. La forme de cette bouteille n'est pas indifférente et il est souvent intéressant que le plasma circule suivant un circuit fermé ; la forme torique est alors une des plus simples à la disposition des ingénieurs. Mais plusieurs problèmes apparaissent au moment de la mise en oeuvre pratique. La chaleur considérable émise lors de la fusion rend nécessaire un liquide de refroidissement tel l'argon ou l'azote liquide contenu dans un cryostat. Des aimants assurant le confinement créent un champ magnétique et des efforts dans les structures tendent à faire exploser le tore.

Actuellement ces forces sont reprises, par l'intermédiaire d'une structure de soutènement de contour généralement cylindrique qui entoure le tore, au moyen de cerces de frettage pour leur composante radiale, au moyen d'un tirant central pour leur composante axiale.

La cohésion de l'appareil de fusion étant réalisée, la mise en service est possible après construction d'une enceinte externe de protection biologique de béton épaisse autour de l'appareil de fusion.

Cette construction n'est pas idéale car l'enceinte de protection biologique possède du fait de son épaisseur une grande résistance mécanique qui n'est pas exploitée. De plus le tirant central, volumineux et pesant, doit être l'objet d'une construction particulière pour lui éviter d'être le siège de courants de Foucault indésirables : dans des installations existantes, on emploie des feuilles d'acier en assemblage lamellé-collé.

La nécessité de travailler à une température très basse, de l'ordre de quelques degrés Kelvin, implique aussi l'emploi d'aciers spéciaux pour éviter la fragilisation de ce tirant, ainsi que des vérins de mise en tension du tirant ; le fluide actif de ces vérins doit être analogue au fluide cryogénique employé pour la réfrigération du tore, par exemple de l'azote ou de l'argon liquide.

Le dispositif de serrage axial constitué du tirant et des vérins associés est donc coûteux et indésirable dans un lieu où des équipements nombreux tels que le bobinage électrique, les circuits de refroidissement et les appareils de mesure doivent être installés, et où les contraintes d'aménagement sont donc sérieuses.

La présente invention a pour objet un dispositif de serrage axial d'un appareil torique de fusion qui consiste à faire reprendre les efforts mis en jeu par l'enceinte externe de protection biologique.

Ce dispositif de serrage axial comprend un réacteur de forme torique à l'intérieur duquel s'effectue la fusion, une structure de soutien dudit tore à contour généralement cylindrique assurant au réacteur un double serrage axial et radial et une enceinte externe de protection biologique, et se caractérise par le fait que les efforts de serrage axial transmis au tore par l'intermédiaire de la structure de soutien sont repris par l'enceinte externe de béton par l'intermédiaire de vérins, le tirant central étant supprimé. Le dispositif objet de l'invention autorise en outre l'emploi de vérins possédant un fluide actif classique, liquide à température ambiante.

De toute façon, les caractéristiques essentielles de l'invention seront mieux comprises à l'aide des figures explicitées ci-après, figures données à titre illustratif et nullement limitatif :

- la figure 1 représente en coupe schématique une installation de fusion d'après l'art antérieur ;
- la figure 2 représente une installation de fusion d'après l'invention ;
- la figure 3 représente une installation de fusion d'après un autre mode de réalisation de l'invention.

Ces trois vues sont en demi-coupe central, l'installation étant supposée généralement à symétrie de révolution ou polygonale, sans cependant que cette forme soit nécessaire à la mise en oeuvre de l'invention. L'axe de révolution vertical est noté par AA sur les figures.

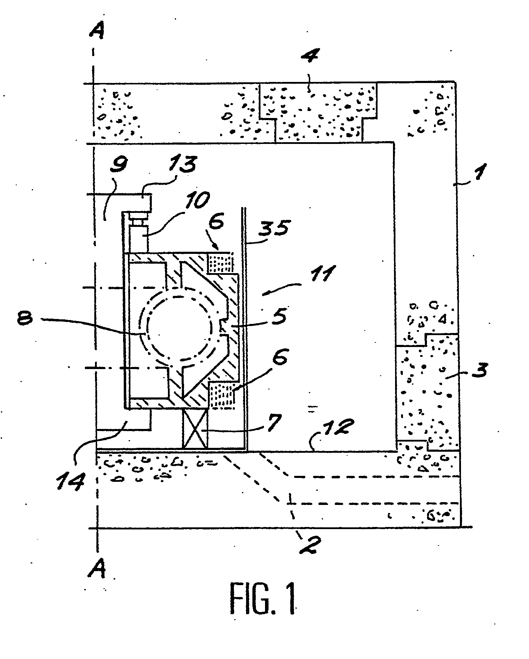

L'installation de fusion nucléaire représentée figure 1 comprend une enceinte 1 externe de protection biologique en béton, hermétique à l'exception des secteurs de passage 2 des câbles d'alimentation électrique et des canalisation de fluide, de portes d'accès 3 et de trémies de manutention 4, ces diverses ouvertures étant fermées lors de la mise en service de l'installation.

Cette enceinte 1 contient l'appareil de fusion 11 constitué entre autres d'une structure de soutien 5 et d'un tore 8, maintenu par la structure de soutien 5, où s'effectue la fusion. La structure de soutien 5 est maintenue par des cerces de frettage 6 circonférentielles qui peuvent être constituées de câbles assurant une précontrainte ; elle est posée sur le plancher 12 de l'enceinte 1 au moyen de piliers 7 et serrée axialement par l'intermédiaire d'un tirant 9 central qui la traverse de part en part et qui porte deux épaulements 13 et 14 à ses extrémités supérieure et inférieure. C'est sur un de ces épaulements que l'on dispose les vérins de serrage 10. Le tirant 9 subit donc un effort de traction égal à l'effort de compression subi par la structure de soutien 5. Comme les vérins 10 sont placés à l'intérieur du cryostat 35 rempli de gaz liquéfié, leur température de service est très basse, ce qui nécessite l'emploi d'un fluide actif cryogénique pour garantir un bon fonctionnement de ces derniers.

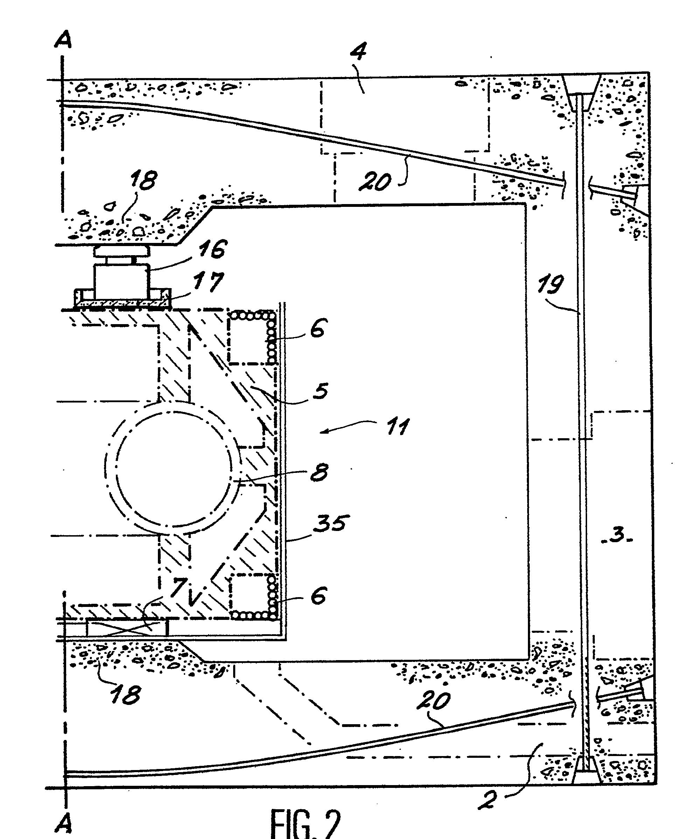

Une réalisation possible de l'invention, représentée sur la figure 2, montre de nouveau un tore de fusion 8, une structure de soutien 5 maintenue radialement par des cerces 6 et une enceinte 1 de protection biologique pourvue des mêmes ouvertures 2, 3, 4 que dans la figure 1.

Conformément à l'invention, le serrage axial de l'appareil de fusion 11 est précisément assuré par cette enceinte 1 dont les parois supérieure et inférieure sont épaissies en leur centre et vers l'intérieur, de manière à former des butées d'appui 18 sur lequelles on dispose les appuis 7 et les vérins 16.

Cette disposition de l'installation permet donc de faire l'économie du tirant central 9. L'espace ainsi libéré peut être occupé par des bobinages électriques, des canalisations de fluide réfrigérant, des instruments de mesure. De plus, les vérins 16 sont moins directement en contact avec la source froide que les vérins 10 de la figure 1 ; il est donc possible de prévoir des vérins de technologie classique, dont le fluide actif est liquide à température ambiante, ce qui implique toutefois la présence d'une cale enveloppe de protection thermique 17.

L'enceinte 1 devenue travaillante doit faire l'objet d'une construction plus élaborée que dans l'art antérieur de la figure 1, le béton ayant des caractéristiques mécaniques de traction et de cisaillement bien inférieures à celles de compression. Selon un mode possible de réalisation de l'invention non représenté ici, l'enceinte 1 est en béton armé. Selon un autre mode de réalisation, l'enceinte 1 peut être constituée de charpentes métalliques résistantes noyées dans le béton et jouant le rôle d'armature. Selon un mode de réalisation de l'invention indiqué figure 2, le béton est précontraint par des câbles verticaux 19 disposés dans la paroi latérale de l'enceinte 1 et par des câbles 20 diamétralement disposés dans ses parois supérieure et inférieure.

Dans tous les cas, les butées 18 permettent une meilleure répartition des contraintes.

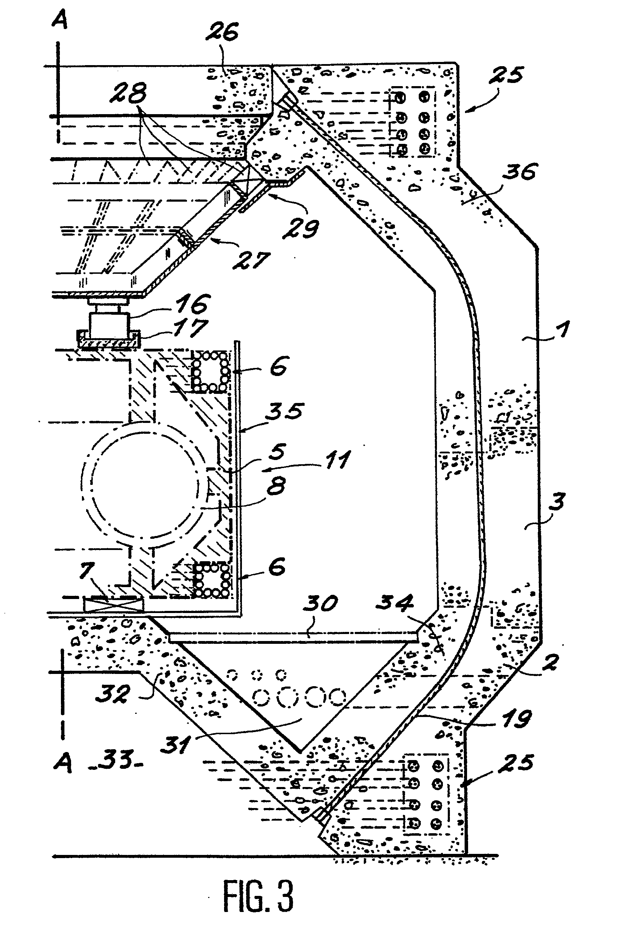

Une autre réalisation de l'invention est représentée figure 3. Ici, l'effort de serrage axial est transmis des vérins 16 à l'enceinte 1 par l'intermédiaire d'une charpente métallique 27 qui peut être liée à ladite enceinte 1 par des cales démontables 28 et des structures de soutien 29. La paroi latérale de l'enceinte 1 est incurvée vers l'intérieur à ses extrémités supérieure 36 et inférieure 34 selon une forme de tonnelet. La paroi inférieure 32 de l'enceinte 1 est tronconique, ce qui engendre un espace inférieur 33 qui peut recevoir un local contenant par exemple des moyens de diagnostics et un espace latéral 31, limité également par l'extrémité inférieure 34 oblique de l'enceinte 1 et par un plancher de service 30. Cet espace 31 peut être avantageusement occupé par les alimentations de puissance et les canalisations fluides, libérant l'espace au-dessus du plancher 30 au profit des robots de maintenance.

Dans le cas d'une construction en béton précontraint, les câbles verticaux 19 suivent la courbure de la paroi latérale, et on complète l'installation par des réseaux de câbles circonférentiels 25 de précontrainte. Il est alors possible de rendre amovible une partie de la paroi supérieure de l'enceinte 1 non en contact avec les cales 28 pour en faire une trappe 26 par laquelle on pourra faire passer l'appareil de fusion 11 préalablement assemblé à l'extérieur.

Les avantages de cette réalisation de l'invention par rapport à celle de la figure 2 résident dans une meilleure répartition des contraintes : on réduit le porte-à-faux radial auquel était soumise la paroi supérieure de l'enceinte 1. La disposition tronconique 32 de la paroi inférieure de l'enceinte 1 est également avantageuse car elle travaille principalement en compression.

Il apparaît à présent que la suppression du tirant 9 central du tore 8 est à la fois possible et avantageuse du point de vue du gain d'espace et de l'économie réalisée sur le tirant lui-même et grâce à l'emploi de vérins ordinaires. L'invention, décrite ci-dessus pour un type d'installation déterminé, peut s'appliquer cependant à tout appareil torique de fusion disposé dans une enceinte de protection biologique résistante mécaniquement.

## Revendications

1. Installation de fusion nucléaire comprenant un réacteur de forme torique (8) à l'intérieur duquel s'effectue la fusion, une structure de soutien (5) dudit tore (8) à contour généralement cylindrique assurant au réacteur un double serrage axial et radial et une enceinte (1) de protection biologique, caractérisée par le fait que les efforts de serrage axial transmis au tore (8) par l'intermédiaire de la structure de soutien (5) sont repris par l'enceinte 1 externe de protection biologique en béton par l'intermédiaire de vérins (16).

2. Installation selon la revendication 1, caractérisée en ce que les vérins (16) de serrage axial possèdent un fluide actif classique, liquide à température ambiante.

3. Installation selon l'une quelconque des revendications 1 ou 2, caractérisée en ce qu'elle comprend une charpente métallique (27) disposée entre les vérins (16) de serrage axial et l'enceinte (1) et qui transmet les efforts de serrage à celle-ci.

4. Installation selon l'une quelconque des revendications 1 à 3, caractérisée en ce que le béton de l'enceinte (1) est précontraint.

5. Installation selon l'une quelconque des revendications 1 à 3, caractérisée en ce que le béton de l'enceinte (1) est armé par des armatures de béton classiques.

6. Installation selon l'une quelconque des revendications 1 à 3, caractérisée en ce que le béton de l'enceinte (1) est armé par des charpentes noyées.

## Claims

1. Nuclear fusion installation comprising a toroidal reactor (8) within which the fusion takes place, a support structure (5) for said torus (8) having a generally cylindrical contour ensuring a double radial and axial fixing and a biological protection enclosure (1), characterized in that the axial fixing stresses transmitted to the torus (8) via the support structure (5) are taken up by the outer concrete biological protection enclosure (1) via jacks (16).

2. Installation according to claim 1, characterized in that the axial fixing jacks (16) have a conventional active fluid, which is liquid at ambient temperature.

3. Installation according to either of the claims 1 or 2, characterized in that it comprises a metal structure (27) disposed between the axial fixing jacks (16) and the enclosure (1) and which transmits the fixing forces thereto.

4. Installation according to any one of the claims 1 to 3, characterized in that the concrete of the enclosure (1) is prestressed.

5. Installation according to any one of the claims 1 to 3, characterized in that the concrete of the enclosure (1) is reinforced by conventional concrete reinforcing structures.

6. Installation according to any one of the claims 1 to 3, characterized in that the concrete of the enclosure (1) is reinforced by embedded structures.

## Patentansprüche

1. Vorrichtung zur Kernfusion, aufweisend einen torusförmigen Reaktor (8), in dessen Inneren die Fusion erfolgt, einen Stützaufbau (5) des Torus (8) mit allgemein zylindrischer Kontur, der für den Reaktor eine doppelte axiale und radiale Klemme sicherstellt, und eine Hülle (1) zum biologischen Schutz, dadurch gekennzeichnet, daß die mittels der Stützstruktur (5) auf den Torus (8) übertragenen Beanspruchungen axialer Klemmung durch den Außenmantel (1) für biologischen Schutz mittels Zylindern (16) wiederaufgenommen werden.

2. Vorrichtung nach Anspruch 1, dadurch gekennzeichnet, daß die Zylinder (16) zur axialen Klemmung ein klassisches aktives Fluid besitzen, das bei Umgebungstemperatur flüssig ist.

3. Vorrichtung nach einem beliebigen der Ansprüche 1 oder 2, dadurch gekennzeichnet, daß sie eine metallische Tragkonstruktion (27) aufweist, die zwischen den Zylindern (16) zur axialen Klemmung und dem Mantel (1) angeordnet ist und die die Klemmbeanspruchungen an diese überträgt.

4. Vorrichtung nach einem beliebigen der Ansprüche 1 bis 3, dadurch gekennzeichnet, daß der Beton des Mantels (1) mechanisch vorgespannt ist.

5. Vorrichtung nach einem beliebigen der Ansprüche 1 bis 3, dadurch gekennzeichnet, daß der Beton des Mantels (1) mittels kalssischer Betonbewehrungen armiert ist.

6. Vorrichtung nach einem beliebigen der Ansprüche 1 bis 3, dadurch gekennzeichnet, daß der Beton des Mantels (1) mittels eingelassener Tragkonstruktionen armiert ist.

FIG. 1

FIG. 2

FIG. 3